# EUROPÄISCHE PATENTANMELDUNG

(11) **EP 3 148 062 A1**
(43) Veröffentlichungstag der Anmeldung: **29.03.2017**
(21) Anmeldenummer: 15187127.4
(22) Anmeldetag: 28.09.2015
(51) Int. Cl.: H02M 1/12, H02M 3/335, H02M 3/337, H02M 5/458, H02M 7/49, H02M 1/00

(54) **LEISTUNGSÜBERTRAGER MIT ISOLIERTEN ZELLEN**

(71) Anmelder: Siemens Aktiengesellschaft, 80333 München (DE)
(72) Erfinder: Damec, Vladislav, 691 43 Hlohovec (CZ); Hörist, Gerald, 1220 Wien (AT); Pürstl, Gerrit, 1090 Wien (AT); Trnka, Alexander, 2201 Gerasdorf bei Wien (AT)

(57) **Zusammenfassung**

Die Erfindung betrifft einen Leistungsübertrager (1) zur Übertragung von elektrischer Energie zwischen ersten Übertrageranschlüssen (11) und zweiten Übertrageranschlüssen (12) des Leistungsübertragers (1). Für einen verbesserten Aufbau des Leistungsübertragers wird vorgeschlagen, dass der Leistungsübertrager (1) mindestens zwei erste Übertrageranschlüsse (11) und mindestens zwei zweite Übertrageranschlüsse (12) aufweist, wobei der Leistungsübertrager (1) isolierte Zellen (2) aufweist, wobei die isolierten Zellen (2) zwei erste Zellenanschlüsse (21) und zwei zweite Zellenanschlüsse (22) aufweisen, wobei die isolierten Zellen (2) Leistungshalbleiter (3) aufweisen, mit denen eine an den ersten Zellenanschlüssen (21) anliegende erste Spannung (u₁) in eine vorgebbare zweite Spannung (u₂) an den zweiten Zellenanschlüssen (22) oder eine an den zweiten Zellenanschlüssen (22) anliegende zweite Spannung (u₂) in eine vorgebbare erste Spannung (u₁) an den ersten Zellenanschlüssen (21) umwandelbar ist, wobei die ersten Zellenanschlüsse (21) und die zweiten Zellenanschlüsse (22) galvanisch voneinander isoliert sind, wobei zwischen zwei der ersten Übertrageranschlüsse (11) eine erste Anzahl der isolierten Zellen (2) mit ihren ersten Zellenanschlüssen (21) in einer Reihenschaltung angeordnet ist, wobei zwischen zwei der zweiten Übertrageranschlüsse (12) eine zweite Anzahl der isolierten Zellen (2) mit ihren zweiten Zellenanschlüssen (22) in einer Reihenschaltung angeordnet ist. Ferner betrifft die Erfindung ein Verfahren zum Übertragen von elektrischer Energie mittels eines solchen Leistungsübertragers (1).

## Beschreibung

Die Erfindung betrifft einen Leistungsübertrager zur Übertragung von elektrischer Energie zwischen ersten Übertrageranschlüssen und zweiten Übertrageranschlüssen des Leistungsübertragers. Die Erfindung betrifft weiter ein Verfahren zum Übertragen von elektrischer Energie mittels eines solchen Leistungsübertragers.

Aufgrund der Energiewende zeichnet sich bei der Energieerzeugung ein Übergang von großen fossilen Energiequellen hin zu vielen dezentralen, möglichst erneuerbaren Energiequellen ab. Eine der Auswirkungen der erwähnten Dezentralisierung ist, dass an das elektrische Versorgungsnetz immer mehr elektronische Umrichtersysteme angeschlossen werden. Umrichtersysteme dienen dazu elektrische Leistung zu übertragen. Ein bedeutender Teil davon sind die netzseitigen Einheiten der erneuerbaren Quellen, welche die elektrische Energie auf die Form umwandeln, die für das Versorgungsnetz geeignet ist. Der Anzahl und Anteil der rekuperationsfähigen Umrichtersysteme, also der Systeme, die die elektrische Energie aus dem Netz ziehen können, als auch ins Netzrückspeisen können, ist dadurch kontinuierlich ansteigend. Der steigende Anteil der elektronischen Systeme, die vermehrt die Rolle der Netzversorger übernehmen, hat einige Auswirkungen auf die Umstände in dem Versorgungsnetz. Eine der Auswirkungen ist die Oberwellenbelastung des Versorgungsnetzes, die bei den Umrichtersystemen allgemein höher ist als bei den traditionellen Quellen. Dadurch gewinnt die Oberwellensauberkeit im Netz an Bedeutung. Die Notwendigkeit, möglichst oberwellenfreie elektrische Energie ins Netz zu liefern, stellt für die Umrichtersysteme immer höhere Anforderungen.

Die erneuerbaren Quellensysteme bestehen oft aus mehreren Quellen, es werden mehrere Energieträger kombiniert und die Systeme beinhalten manchmal auch die Einheiten für die Akkumulation der Energie. Die Akkumulation der Energie wird immer notwendiger, da die Verfügbarkeit der erneuerbaren Energiequellen beschränkt ist. Die kombinierten Systeme für die Umwandlung der Energie aus verschiedenen Quellen und deren Akkumulation benötigen möglichst flexiblere, modulare Umrichtersysteme, welche elektrische Energie entsprechend der Oberwellenanforderungen an das Netz liefern.

Die meisten, heutzutage eingesetzten Geräte und Systeme haben ihren Ursprung in der Antriebstechnik und es handelt sich um mehr oder weniger angepasste rückspeisefähige Netzeinheiten. Die Netzeinheiten bestehen meistens aus einem Spannungszwischenkreis, einem dreiphasigen Wechselrichter und einem Netzfilter. Es gibt mehrere Wechselrichtertopologien, die unterschiedliche Anforderungen auf die Stärke und Wirkung des Netzfilters stellen.

Weiterhin gibt es Wechselrichtertopologien, die den zentralen Zwischenkreis auf dezentralen Zellen oder Subsysteme aufgeteilt haben. Diese Topologien haben wesentlich kleinere Anforderungen auf die Wirkung und Größe des Filters.

Ein Beispiel eines Umrichters mit dezentralen Zwischenkreis, auch als Multizellenumrichter oder M2C bezeichnet, ist aus der DE 101 03 031 A1 bekannt. Dieser hat den Vorteil, durch seine einzelnen Spannungsstufen eine Wechselspannung mit geringem Oberwellenanteil erzeugen zu können.

Aus der US 5 986 909 A ist ein weiterer modularer Umrichter bekannt. Auch mit diesem können aufgrund der Vielzahl der einzelnen Module Wechselspannungen mit geringem Oberwellenanteil erzeugt werden.

Der Erfindung liegt die Aufgabe zugrunde, einen verbesserten Aufbau für einen Leistungsübertrager anzugeben, der im Betrieb nur geringe Oberschwingungen erzeugt und modular aufgebaut ist.

Die Aufgabe wird durch einen Leistungsübertrager zur Übertragung von elektrischer Energie zwischen ersten Übertrageranschlüssen und zweiten Übertrageranschlüssen des Leistungsübertragers gelöst, wobei der Leistungsübertrager mindestens zwei erste Übertrageranschlüsse und mindestens zwei zweite Übertrageranschlüsse aufweist, wobei der Leistungsübertrager isolierte Zellen aufweist, wobei die isolierten Zellen zwei erste Zellenanschlüsse und zwei zweite Zellenanschlüsse aufweisen, wobei die isolierten Zellen Leistungshalbleiter aufweisen, mit denen eine an den ersten Zellenanschlüssen anliegende erste Spannung in eine vorgebbare zweite Spannung an den zweiten Zellenanschlüssen oder eine an den zweiten Zellenanschlüssen anliegende zweite Spannung in eine vorgebbare erste Spannung an den ersten Zellenanschlüssen umwandelbar ist, wobei die ersten Zellenanschlüsse und die zweiten Zellenanschlüsse galvanisch voneinander isoliert sind, wobei zwischen zwei der ersten Übertrageranschlüsse eine erste Anzahl der isolierten Zellen mit ihren ersten Zellenanschlüssen in einer Reihenschaltung angeordnet ist, wobei zwischen zwei der zweiten Übertrageranschlüsse eine zweite Anzahl der isolierten Zellen mit ihren zweiten Zellenanschlüssen in einer Reihenschaltung angeordnet ist. Die Aufgabe wird weiter durch Verfahren zum Übertragen von elektrischer Energie mittels eines solchen Leistungsübertragers gelöst, wobei die Leistungshalbleiter der isolierten Zellen derart angesteuert werden, dass ein an den ersten Übertrageranschlüssen anliegendes erstes Spannungssystem in ein vorgebbares zweites Spannungssystem an den zweiten Übertrageranschlüssen, insbesondere in ein zweites Spannungssystem, das sich in Bezug auf Spannungshöhe und/oder Frequenz und/oder Phasenlage vom ersten Spannungssystem unterscheidet, umgewandelt wird.

Vorteilhafte Ausgestaltungen der Erfindung sind in den abhängigen Ansprüchen angegeben.

Der Erfindung liegt die Erkenntnis zugrunde, dass sich der Aufbau eines modularen Leistungsübertragers dadurch verbessern lässt, dass dessen Zellen eine galvanische Trennung, auch als galvanische Isolation bezeichnet, aufweisen. Durch die Zusammenschaltung der einzelnen isolierten Zellen ergibt sich die gewünschte Topologie des Leistungsübertragers. Die isolierten Zellen weisen zwei Hälften auf, die voneinander beispielsweise über einen Transformator galvanisch getrennt sind. Beide Hälften weisen darüber hinaus jeweils zwei Zellenanschlüsse auf, mit denen die einzelnen isolierten Zellen verschaltet sind.

Dabei hat es sich als vorteilhaft erwiesen, zwischen den einzelnen ersten Übertrageranschlüssen eine Reihenschaltung der isolierten Zellen anzuordnen. Die Reihenschaltung wird an den ersten Zellenanschlüssen der isolierten Zellen vorgenommen. Ebenso werden zwischen den einzelnen zweiten Übertrageranschlüssen eine weitere Reihenschaltung der isolierten Zellen angeordnet. Die Reihenschaltung wird dort an den zweiten Zellenanschlüssen der isolierten Zellen vorgenommen.

Abhängig von den Spannungssystemen, die an die beiden Übertrageranschlüsse angeschlossen werden, kann die Verschaltung der einzelnen isolierten Zellen variieren. Dabei können das Spannungssystem an den ersten Übertrageranschluss und das Spannungssystem an dem zweiten Übertrageranschluss unabhängig voneinander gewählt werden. Als Spannungssysteme kommen dabei beispielsweise ein DC-Spannungssystem, ein einphasiges Wechselspannungssystem oder ein dreiphasiges Wechselspannungssystem, insbesondere ein Drehstromsystem, zur Anwendung.

Abhängig davon, welche Spannungssysteme mit dem Leistungsübertrager miteinander verbunden werden, ergibt sich die Verschaltung der isolierten Zellen. Allen Verschaltungen ist dabei gemeinsam, dass an den ersten Übertrageranschlüssen eine Reihenschaltung einiger oder aller isolierten Zellen an ihren ersten Zellenanschlüssen vorgenommen wird. Ebenso wird an den zweiten Übertrageranschlüssen eine Reihenschaltung einiger oder aller isolierten Zellen vorgenommen. Dabei können an der Verschaltung andere isolierte Zellen beteiligt sein als bei den Anschlüssen zwischen den ersten Übertrageranschlüssen. Handelt es sich bei dem Spannungssystem, das mit dem ersten bzw. zweiten Übertrageranschlüssen verbunden wird, um ein DC-Spannungssystem oder um ein einphasiges Wechselspannungssystem, so hat es sich als vorteilhat erwiesen, dass die ersten bzw. zweiten Übertrageranschlüsse jeweils zwei Potentialanschlüsse aufweisen. Diese beiden Potentialanschlüsse sind dann dafür vorgesehen, mit den Potentialen des Spannungssystems verbunden zu werden. Bei einem DC-Spannungssystem sind dies das Plus-Potential und das Minus-Potential, bei einem einphasigen Wechselspannungsnetz ist das die Phase und der Nullleiter. Es hat sich als vorteilhaft erwiesen, wenn einer der beiden Übertrageranschlüsse mit einem DC-Spannungssystem oder einem einphasigen Wechselspannungssystem verbunden werden soll, alle isolierten Zellen des Leistungsübertragers in einer Reihenschaltung anzuordnen.

Für eine isolierte Zelle hat es sich als sinnvoll erwiesen, unabhängig für eine Verbindung mit Gleichspannungssystemen oder Wechselspannungssystemen, den gleichen Aufbau vorzusehen. Damit können für alle Spannungssystem die gleichen isolierten Zellen verwendet werden. Der Leistungsübertrager unterscheidet sich lediglich in der Verschaltung der einzelnen isolierten Zellen.

Dabei hat es sich als besonders günstig erwiesen, an den Zellenanschlüssen der isolierten Zellen jeweils einen Gleichrichter anzuordnen. Dieser kann eine an den Zellenanschlüssen anliegende Wechselspannung in eine Gleichspannung umwandeln. Sollte an den Zellenanschlüssen eine Gleichspannung anliegen so kann diese mit Hilfe des Gleichrichters in eine Gleichspannung mit anderer Spannung umgewandelt werden. Zwischen den Gleichrichtern wird ein bidirektionaler DC/DC Wandler vorgesehen, der die beiden Gleichspannungen miteinander verbindet und einen Energieaustausch in beide Richtungen ermöglicht. In diesem DC/DC Wandler ist in vorteilhafter Weise die Potentialtrennung, beispielsweise durch einen Transformator integriert. Dabei kann es sich um einen resonant schaltenden DC/DC Wandler handeln, dessen Transformator mit einer mittelfrequenten oder hochfrequenten Spannung betrieben wird. Dies ermöglicht eine besonders kompakte und leichte Ausführung des Transformators.

Der DC/DC Steller ist von seiner Anordnung her bidirektional ausgeführt. Dadurch wird ein Energiefluss in von ersten Übertrageranschlüssen zu zweiten Übertrageranschlüssen und von zweiten Übertrageranschlüssen zu ersten Übertrageranschlüssen sichergestellt, da innerhalb der isolierten Zellen ein Energiefluss von ersten Zellenanschlüssen zu zweiten Zellenanschlüssen und von zweiten Zellenanschlüssen zu ersten Zellenanschlüssen möglich ist. Die Steuerung der einzelnen DC/DC Wandler einer isolierten Zelle erfolgt autonom und dient unter anderem dazu die Spannungen zwischen ersten und zweiten Zellenanschlüssen galvanisch zu trennen. Auch die Erkennung der notwendigen Energieflussrichtung und die sich daraus folgende Behandlung erfolgt ebenfalls autonom vom DC/DC Wandler.

Die Wahl der einzelnen Leistungshalbleiter für die Realisierung des DC/DC Wandlers und der Gleichrichter ist im Prinzip abhängig von der Zellenspannung und der Zellenleistung. Bei höheren Zellenspannungen >600V ist die Verwendung von SiC Mosfets ein sinnvoll gangbarer Weg. Die Zellenspannung hängt von der gewünschten Systemausgangsspannung und der Zellenanzahl ab.

Die Kommunikation der Steuermodule, die zur Ansteuerung der Gleichrichter und DC/DC Wandler erforderlich sind, folgt vorteilhafterweise von einer zentralen Ansteuereinheit aus über ein Bussystem. In besonders vorteilhafter Weise kann dieses Bussystem z.B. in einer Linien- oder Ringtopologie ausgeführt sein. Aber auch eine Sterntopologie wäre für diese Anforderung sinnvoll. Für den Datenaustausch wird es vermutlich günstig sein, wenn die Ansteuereinheit als Master und die isolierten Zellen mit ihren dort angeordneten Control Units (CU) als Slave fungieren. Die Nutzdaten werden dabei in Protokolle verpackt, welche die Aufgaben der Synchronisierung, Adressierung und Datensicherheit übernehmen.

Es hat sich als vorteilhaft erwiesen, dass die Ansteuereinheit die Steuer-/Regelfunktionen für das Verhalten an den Übertrageranschlüssen übernimmt. Dazu sendet es entsprechende Informationen an die Control Unit der einzelnen isolierten Zellen. Die isolierten Zellen weisen mit der dort angeordneten Control Unit eine Intelligenz auf, mit der die Steuerung/Regelung der Leistungshalbleiter innerhalb der isolierten Zelle dezentral vorgenommen wird. Mit dieser Anordnung kann die erforderliche Kommunikation zwischen Ansteuereinheit und den isolierten Zellen minimiert werden, so dass auch bei beschränkten Datenraten eine Vielzahl von isolierten Zellen in dem Leistungsübertrager betreibbar sind.

Die Nutzdaten vom Master zu den Slaves umfassen für jede Zelle zumindest einen Sollwert für die PWM-Einheit. Außerdem ist es sicherlich günstig, ein Steuerwort zu übertragen, damit gegebenenfalls isolierte Zellen gesperrt werden können. Die Nutzdaten von den Slaves zum Master umfassen für jede Zelle die Höhe der Zwischenkreisspannung und die Stromstärke an den Zellenanschlüssen der einzelnen isolierten Zellen.

Insgesamt ist also der Datenaustausch pro Zelle mit ca. 16 bis 32 Bit Nutzdaten (im zyklischen Betrieb) in beide Richtungen notwendig. Wenn insgesamt beispielsweise 18 Zellen angesteuert werden sollen und man davon ausgeht, dass ein Bussystem wie Ethernet mit "full duplex" und einer Geschwindigkeit von 100 Mbit/s zur Verfügung steht, dann wird für den Datenaustausch in beide Richtungen ca. 11,5µs verbraucht (wenn man von einem Protokolloverhead von 100% der Nutzdaten ausgeht). Mit diesem System sind also Regelzyklen von ca. 16kHz möglich, wenn im zyklischen Betrieb das vorhandene Bussystem gut ausgenutzt wird, indem für jede Übertragung ein eigener "Timeslot" zur Verfügung steht. Bei Anordnungen mit sehr vielen Zellen, oder wenn kürzere Regelzyklen notwendig werden, muss auf ein schnelleres Bussystem wie z.B. Ethernet mit 1 Gbit/s umgestiegen werden.

Durch den Leistungsübertrager ergeben sich zahlreiche Vorteile bei der fortschreitenden Dezentralisierung von Erzeugungsanlagen durch Erneuerbare Energien. Die höheren Anforderungen an Umrichtersysteme, insbesondere was Netzrückwirkungen angeht, können durch den Leistungsübertrager einfacher erfüllt werden. Zusätzlich zu den Richtlinien der Energiewirtschaft kommen immer mehr kundenspezifische Wünsche und Anforderungen, die es erfordern, schnell auf diese Marktwünsche reagieren zu können. Dafür bietet sich der modulare Aufbau des Leistungsübertragers mit isolierten Zellen an. Durch dieses einzigartig modulare Konzept kann in kürzester Zeit auf diese Wünsche und Anforderungen eingegangen werden und modular neue Leistungsklassen bzw. Umrichtertopologien bereitgestellt werden. Viele Systeme im Bereich der erneuerbaren Energien benötigen nicht nur Netzeinspeisewechselrichter sondern auch DC/DC-Converter zur DC-Kopplung von DC-Quellen bzw. Senken an den Zwischenkreis. Durch den Leistungsübertrager ist es möglich, mit der identen Hardware komplette Systeme sowohl für die Antriebstechnik als auch für erneuerbare Energien zu erstellen. Die durch Richtlinien, Kundenanforderungen oder Spezifikationen geforderten Eigenschaften können auf einfache Weise und unter Verwendung der isolierten Zellen als gleiche Module erfüllt werden.

Dadurch dass die Sperrspannung der Halbleiter nur auf die einzelnen Zellspannungen ausgelegt werden müssen, können extrem schnellschaltende Leistungsübertrager realisiert werden. Dadurch können die Oberwellen deutlich reduziert werden und die benötigten Eingangsfilter bzw. Ausgangsfilter sehr kompakt ausgeführt werden. Teilweise kann auf die Verwendung dieser Filter vollständig verzichtet werden. Schaltfrequenzen der Halbleiter über 100 kHz sind mit herkömmlichen MOSFETS realisierbar und übersteigen damit das Schaltverhalten heutiger Solarwechselrichter und Umrichter in der Antriebstechnik, die je nach Leistungsklasse üblicherweise zwischen 2 und 16kHz betrieben werden.

Zusammenfassend bestehen die Vorteile des Leistungsübertragers in einer sehr kompakten Anordnung durch die Verwendung hoher Schaltfrequenzen. Dadurch lassen sich darüber hinaus die Oberschwingungen und Netzharmonische reduzieren. Verschiedenste Leistungsklassen/Spannungsklassen sind durch einfaches Verschalten der Zellen aufwandsarm herstellbar. Eine idente Hardware für alle Topologien ermöglicht die Steigerung von Gleichteilen und damit eine deutliche Kostenreduktion insbesondere bei Beschaffung und Wartung (Ersatzteilversorgung) der Komponenten des Leistungsübertragers. Die verwendeten Halbleiter sind darüber hinaus kostengünstig beschaffbar. Geringe Produktionskosten entstehen aufgrund einer möglichen automatisierten Leiterplattenfertigung der einzelnen isolierten Zellen. Eine Steuerung, die für alle Systeme angewendet werden kann, bedarf keiner anwendungsspezifischen Anpassung. Der Leistungsübertrager kann kompakt, unter anderem auch wegen des geringen Filteraufwands, ausgeführt werden. Auf die Verwendung von Spezialtrafos für die einzelnen Zellenstränge kann bei dem Leistungsübertrager ohne Einbußen in der Leistungsfähigkeit und Modularität verzichtet werden. Ebenso müssen für die galvanische Trennung keine 50Hz Transformatoren verwendet werden.

Bei einer vorteilhaften Ausgestaltung der Erfindung weist der Leistungsübertrager drei erste Übertrageranschlüsse auf, wobei die isolierten Zellen zwischen den drei ersten Übertrageranschlüssen in einer ersten Sternschaltung angeordnet sind und wobei die jeweiligen Zweige der ersten Sternschaltung eine Reihenschaltung von isolierten Zellen aufweisen, die mittels der ersten Zellenanschlüsse gebildet wird. Diese Anordnung ist besonders vorteilhaft, wenn die ersten Übertrageranschlüsse zur Verbindung mit einem dreiphasigen Spannungssystem vorgesehen sind. Bei dieser Anordnung hat es sich als vorteilhat erwiesen, dass die ersten Übertrageranschlüsse jeweils drei oder vier Potentialanschlüsse aufweisen. Diese Potentialanschlüsse sind dann dafür vorgesehen, mit den drei Phasen des Spannungssystems verbunden zu werden. Als vierter Potentialanschluss kann zusätzlich ein Nullleiter angeschlossen werden. Da bei einem dreiphasigen Wechselspannungsnetz der Nullleiter nicht zwingend notwendig ist, kann auf diesen Potentialanschluss (den vierten Potentialanschluss) verzichtet werden. Bei einem dreiphasigen Wechselspannungssystem hat es sich zudem als vorteilhaft erwiesen, die isolierten Zellen zwischen den drei Potentialanschlüssen der Phasen in einer Sternschaltung oder in einer Dreieckschaltung anzuordnen. Dabei sind die isolierten Zellen dann in einzelne Reihenschaltungen aufgeteilt, wobei die einzelnen Reihenschaltungen dann die Zweige der Sternschaltung bzw. die Zweige der Reihenschaltung darstellen. Der Sternpunkt der Sternschaltung kann mit dem vierten Potentialanschluss verbunden werden.

Handelt es sich bei dem Spannungssystem, das mit den zweiten Übertrageranschlüssen verbunden werden soll um ein DC-Spannungssystem oder um ein einphasiges Wechselspannungssystem, dann hat es sich als günstig erwiesen, die isolierten Zellen, die mit ihren ersten Zellenanschlüssen in der Sternschaltung oder in der Dreieckschaltung angeordnet sind, mit ihren zweiten Zellenanschlüssen in einer Reihenschaltung anzuordnen.

Bei einer weiteren vorteilhaften Ausgestaltung der Erfindung weist der Leistungsübertrager drei zweite Übertrageranschlüsse auf, wobei die isolierten Zellen zwischen den drei zweiten Übertrageranschlüssen in einer zweiten Sternschaltung angeordnet sind und wobei die jeweiligen Zweige der zweiten Sternschaltung eine Reihenschaltung von isolierten Zellen aufweisen, die mittels der zweiten Zellenanschlüsse gebildet wird, wobei eine Gruppe von isolierten Zellen, die über die ersten Zellenanschlüsse in dem gleichen Zweig der ersten Sternschaltung angeordnet sind, mit ihren zweiten Zellenanschlüssen in unterschiedlichen Zweigen der zweiten Sternschaltung angeordnet sind.

Diese Ausführungsform ist besonders vorteilhaft für die Verbindung zweier dreiphasigen Wechselspannungssysteme, insbesondere zweier Drehstromsysteme. Sowohl die ersten als auch die zweiten Übertrageranschlüsse weisen jeweils drei oder vier Potentialanschlüsse auf. Der vierte Potentialanschluss ist für einen nicht notwendigerweise vorhandenen Nullleiter vorgesehen. Die isolierten Zellen sind dabei zwischen den Potentialanschlüssen der ersten Übertrageranschlüsse in einer ersten Sternschaltung angeordnet und zwischen den Potentialanschlüssen der zweiten Übertrageranschlüsse in einer zweiten Sternschaltung angeordnet, wobei die einzelnen drei Zweige der Sternschaltung jeweils durch eine Reihenschaltung von isolierten Zellen gebildet wird. Dabei hat es sich als vorteilhaft erwiesen, dass die isolierten Zellen, die mit ihren ersten Zellenanschlüssen einen Zweig der ersten Sternschaltung bilden, mit ihren zweiten Zellenanschlüssen auf unterschiedliche Zweige der zweiten Sternschaltung verteilt sind.

Es kann eine oder beide Sternschaltungen auch durch eine Dreieckschaltung ersetzt werden. Die Anordnung in einer Sternschaltung oder Dreieckschaltung kann unabhängig davon gewählt werden, wie das Spannungssystem auf der anderen Seite des Leistungsübertragers verschaltet ist.

Wählt man beispielsweise für den Aufbau eines Leistungsübertragers n isolierte Zellen, so sollte n ein Vielfaches von 3 sein, um eine symmetrische Stern- oder Dreieckschaltung aufbauen zu können. Für eine erste Sternschaltung bilden die Zellen 1 bis n/3, n/3 +1 bis 2n/3 und 2n/3 +1 bis n jeweils eine Gruppe, die in einem Zweig der ersten Sternschaltung bzw. ersten Dreieckschaltung angeordnet wird. Für die zweiten Übertrageranschlüsse bilden die isolierten Zellen 1,4,7,... sowie 2,5,8,... und 3,6,9... jeweils einen Zweig der zweiten Stern- oder Dreieckschaltung. Damit kann sichergestellt werden, dass elektrische Energie aus einer Phase, die mit den ersten Übertrageranschlüssen verbunden ist, auf alle Phasen der zweiten Übertrageranschlüsse verteilbar ist. Ebenso ist elektrische Energie aus einer Phase, die mit den zweiten Übertrageranschlüssen verbunden ist, auf alle Phasen der ersten Übertrageranschlüsse verteilbar. Damit kann eine ungleichmäßige oder unsymmetrische Belastung auf einer Seite des Leistungsübertragers durch den Leistungsübertrager auf der anderen Seite ausgeglichen bzw. kompensiert werden.

Im Folgenden wird die Erfindung anhand der in den Figuren dargestellten Ausführungsbeispiele näher beschrieben und erläutert. Es zeigen:
- FIG 1 bis FIG 3: unterschiedliche Leistungsübertrager,
- FIG 4: den Aufbau einer isolierten Zelle und
- FIG 5: einen Modulbaukasten zur Realisierung von Anwendungen zur Leistungsübertragung

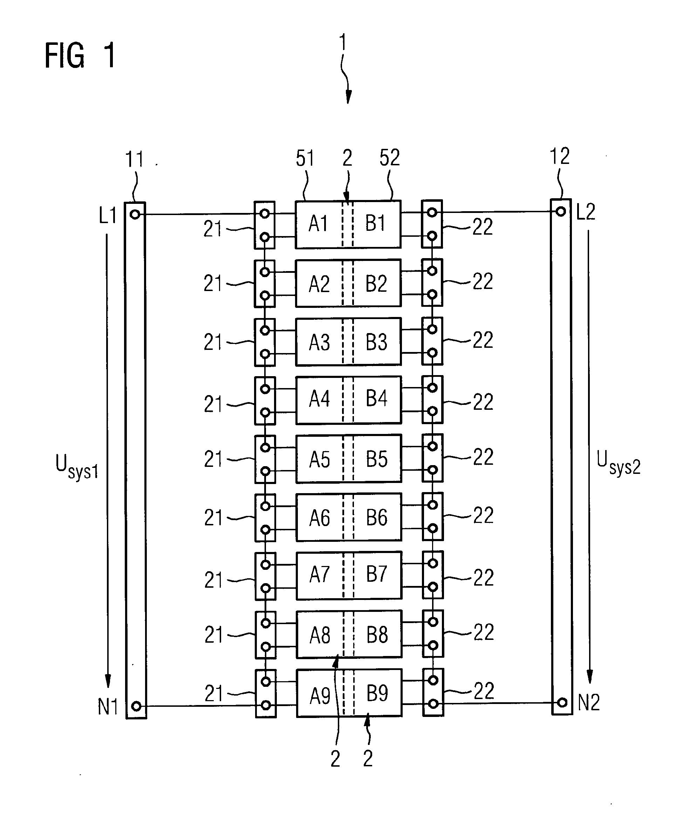

FIG 1 zeigt den Aufbau eines Leistungsübertragers zur Übertragung elektrischer Energie zwischen zwei Spannungssystemen U_{sys1} und U_{sys2}, die mit den Übertrageranschlüssen 11, 12 elektrisch verbunden sind. Bei den Spannungssystemen handelt es sich jeweils um ein einphasiges Wechselspannungssystem mit der Phase L1, L2 und dem Nullleiter N1, N2. Anstelle eines einphasigen Wechselspannungssystems ist dieser Aufbau auch für ein Gleichspannungssystem anwendbar. In diesem Fall würde man die Potentialanschlüsse der Übertrageranschlüsse 11, 12 üblicherweise mit P1/P2 und N1/N2 bezeichnen. Die einzelnen isolierten Zellen 2 weisen jeweils einen ersten Teil 51 und einen zweiten Teil 52 auf, wie in einer der isolierten Zellen 2 dargestellt. Diese sind mit A und B bezeichnet und entsprechend durchnummeriert. Jeder der Teile 51, 52 weist einen Zellenanschluss 21, 22 auf. Der erste Teil 51 der isolierte Zelle 2 weist den ersten Zellenanschluss 21 und der zweite Teil 52 der isolierte Zelle 2 weist den zweiten Zellenanschluss 22 auf. Der erste Teil 51 und der zweite Teil 52 der Zelle 2 sind galvanisch voneinander getrennt, auch als galvanisch isoliert bezeichnet.

Die isolierten Zellen werden jeweils an ihren ersten Zellenanschlüssen 21 (Seite A) sowie an ihren zweiten Zellenanschlüssen 22 (Seite B) in einer Reihenschaltung verschaltet. Die Regelung erfolgt zentral durch eine Control Unit 60, die in dieser Figur nicht dargestellt ist.

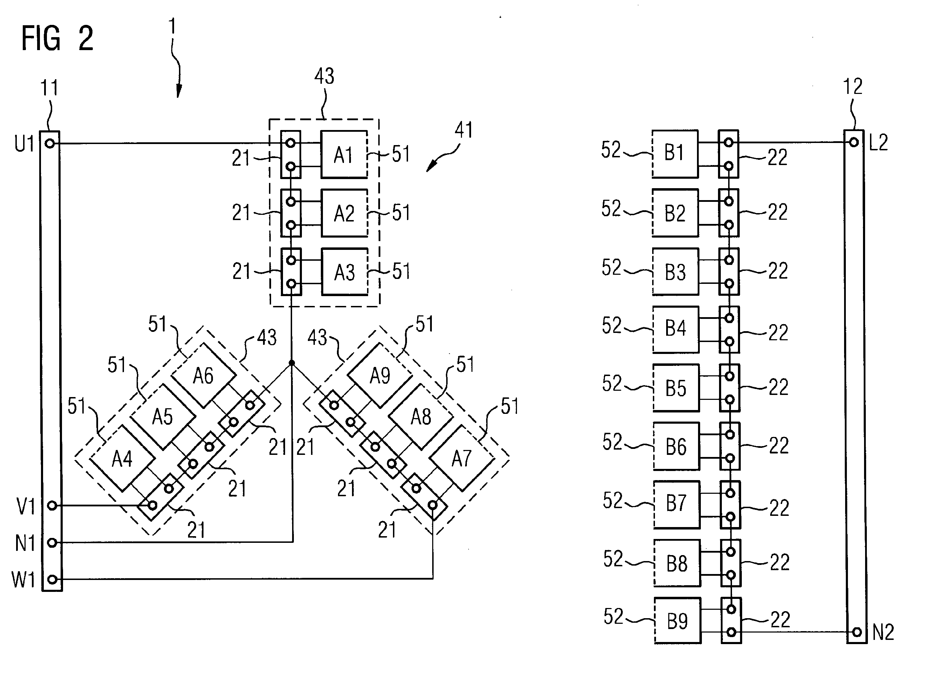

FIG 2 zeigt einen weiteren Aufbau eines Leistungsübertrages zur Übertragung elektrischer Energie zwischen den ersten Übertrageranschlüssen 11 und den zweiten Übertrageranschlüssen 12. Die zweiten Übertrageranschlüsse 12 sind dabei wie in FIG 1 mit einem Gleichspannungssystem oder mit einem einphasigen Wechselspannungssystem verbindbar. Zur Vermeidung von Wiederholung wird diesbezüglich auf die Beschreibung zur FIG 1 und die dort eingeführten Bezugszeichen verwiesen. Der Übersichtlichkeit halber sind der erste Teil 51 und der zweite Teil 52 einer isolierten Zelle 2 räumlich getrennt dargestellt. Dies dient zur Veranschaulichung, wie der Leistungsübertrager 1 aufgebaut und die isolierten Zellen 2 verschaltet sind. Für den Aufbau der Zellen hat es sich als sinnvoll erwiesen, den ersten Teil 51 und den zweiten Teil 52 der isolierten Zellen 2 in räumlicher Nähe zueinander anzuordnen. Als besonders vorteilhaft hat es sich erwiesen, die beiden Teile 51, 52 als isolierte Zelle in einer gemeinsamen Baueinheit auszuführen.

An die ersten Übertrageranschlüsse 11 ist in diesem Ausführungsbeispiel ein dreiphasiges Wechselspannungssystem anschließbar. Die einzelnen Potentialanschlüsse U1, V1, W1 und N1 sind zur Verbindung mit den 3 Phasen und den Nullleiter des Wechselspannungsnetzes vorgesehen. Die isolierten Zellen 2 sind mit ihren ersten Teilen 51 in einer ersten Sternschaltung 41 angeordnet, wobei die Sternschaltung drei Zweige 43 aufweist. Die Zweige werden aus der Reihenschaltung von isolierten Zellen an ihren ersten Zellenanschlüssen 21 gebildet.

Diese Anordnung des Leistungsübertragers 1 wird auch als 3AC/DC bzw. 3AC/1AC Umrichter bezeichnet.

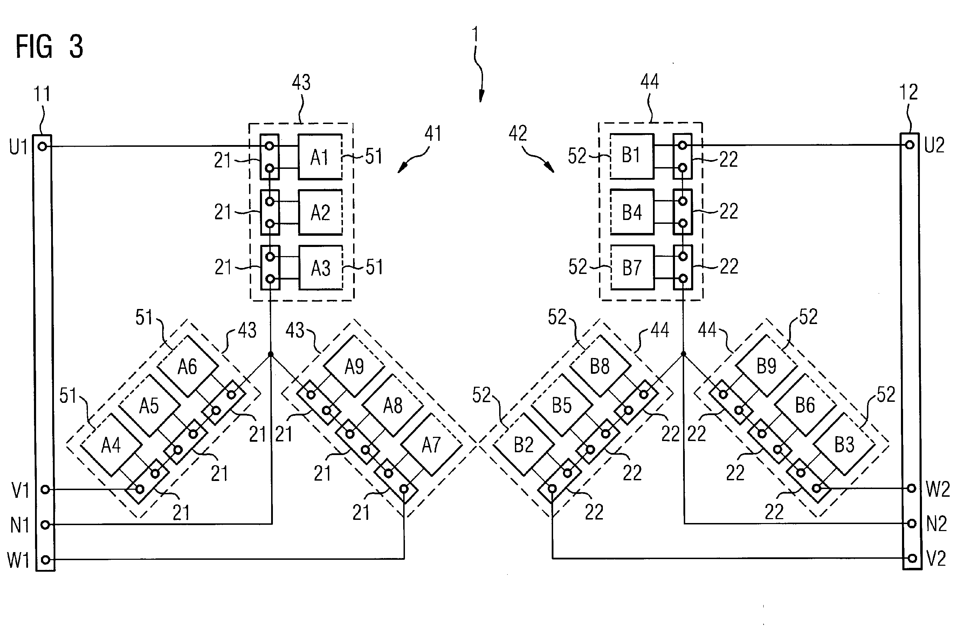

FIG 3 zeigt einen weiteren Aufbau eines Leistungsübertrages zur Übertragung elektrischer Energie zwischen den ersten Übertrageranschlüssen 11 und den zweiten Übertrageranschlüssen 12. Die ersten Übertrageranschlüsse 11 sind dabei wie in FIG 2 mit einem dreiphasigen Wechselspannungssystem verbindbar. Zur Vermeidung von Wiederholung wird diesbezüglich auf die Beschreibung zu den Figuren 1 und 2 sowie auf die dort eingeführten Bezugszeichen verwiesen. Der Übersichtlichkeit halber sind der erste Teil 51 und der zweite Teil 52 einer isolierten Zelle 2 räumlich getrennt dargestellt. Dies dient zur Veranschaulichung, wie der Leistungsübertrager 1 aufgebaut und die isolierten Zellen 2 verschaltet sind. Für den Aufbau der Zellen hat es sich als sinnvoll erwiesen, den ersten Teil 51 und den zweiten Teil 52 der isolierten Zellen 2 in räumlicher Nähe zueinander anzuordnen. Als besonders vorteilhaft hat es sich erwiesen, die beiden Teile 51, 52 als isolierte Zelle in einer gemeinsamen Baueinheit auszuführen.

Zwischen den Potentialanschlüssen U2, V2, W2 und N2 der zweiten Übertrageranschlüsse 12 ist eine zweite Sternschaltung 42 angeordnet. Durch das Durchnummerieren der ersten Teile 51 und zweiten Teile 52 der isolierten Zellen 2 ist erkennbar, dass die isolierten Zellen 2, die mit ihren ersten Zellenanschlüssen 21 im gleichen Zweig 43 der ersten Sternschaltung 41 angeordnet sind, mit ihren zweiten Zellenanschlüssen 22 auf die unterschiedlichen Zweige 44 der zweiten Sternschaltung 42 verteilt sind. Dies ermöglicht es, Energie aus einer Phase des ersten Spannungssystems U_{sys1} auf jede beliebige Phase des Spannungssystems U_{sys2} zu übertragen. Damit kann eine unsymmetrische Belastung in einem der Spannungssysteme U_{sys1}, U_{sys2} in dem jeweils anderen Spannungssystem U_{sys2}, U_{sys1} kompensiert, d.h. ausgeglichen, werden.

Diese Anordnung des Leistungsübertragers 1 wird auch als 3AC/3AC Umrichter bezeichnet.

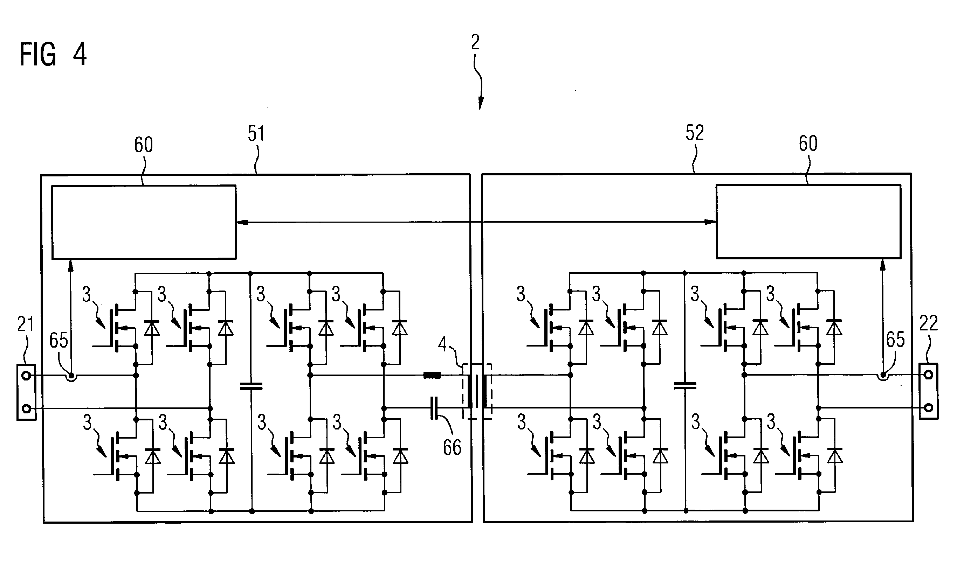

FIG 4 zeigt ein Ausführungsbeispiel für den Aufbau einer isolierten Zelle 2. Der erste Teil 51 und der zweite Teil 52 der isolierten Zellen sind über einen Transformator 4 miteinander verbunden. Der Transformator 4 bewirkt die galvanische Trennung der ersten Zellenanschlüsse 21 von den zweiten Zellenanschlüssen 22. Die Leistungshalbleiter 3 sind derart in der isolierten Zelle 2 angeordnet, dass diese die Spannungen, die an den ersten Zellenanschlüssen 21 und an den zweiten Zellenanschlüssen 22 anliegen, entsprechend umwandeln zu können. Gesteuert oder geregelt wird diese Umwandlung durch eine Control Unit 60, die aus Messwerten, wie beispielsweise einem Strommesswert 65 und der Zwischenkreisspannung, die entsprechenden Schalthandlungen für die Leistungshalbleiter 3 ermittelt und diese an den Steuereingang der jeweiligen Leistungshalbleiter 3 überträgt. Zur Verringerung von Verlusten kann in der Verbindung zwischen Leistungshalbleiter 3 und Transformator 4 ein Resonanzkondensator 66 eingefügt werden, um die galvanische Trennung mittels Vollbrückenresonanzwandlers auszubilden.

Zur Realisierung wurde ein Vollbrückenresonanzwandler gewählt, weil bei dieser Topologie Schaltverluste der Leistungshalbleiter bei hohen Schaltfrequenzen weitgehend vermieden werden. Es ist jedoch auch im Prinzip möglich andere Wandlertopologien für den DC-DC Wandler der Zelle einzusetzen, wie beispielsweise Vollbrückenwandler, Halbbrückenwandler, Push-pull Topologien , also im Prinzip alle Flusswandler-Konfigurationen mit und ohne ZCS,ZVS. Die Wahl der Topologie ist im Prinzip abhängig von der Zellenspannung und der Zellen Leistung.

Der Resonanzwandler weist einem Resonanzkondensator 66 und eine Resonanzdrossel 67 und dem Transformator 4, auch als Übertrager bezeichnet, auf. Dieser Schaltkreis bildet einen Serienschwingkreis wobei in den meisten Anwendungsfällen das Übersetzungsverhältnis des Transformators 4 zu 1:1 gewählt wird. Aber auch hier sind andere Übersetzungsverhältnisse denkbar. Weiter kann auch ein Parallelresonanzwandler zum Einsatz kommen, besonders wenn in einem Betriebspunkt die Ausgangsspannung angehoben werden muss. Jedoch gibt es dann Einschränkungen. Die Isolationsspannung des Leistungsübertragers 1 muss auf die maximale Systemspannung, d.h. die Spannung an den Übertrageranschlüssen 11, 12 bemessen werden, auch wenn die Spannung an den Zellenanschlüssen 21, 22 nur ein Bruchteil der Systemspannung ist. Aus diesem Aspekt heraus bietet sich ebenfalls ein Resonanzwandler an, da sich auf Grund der hohen Isolationsanforderung eine hohe Streuinduktivität des Transformators 4 ergeben kann. Diese Streuinduktivität kann der Resonanzdrossel 67 hinzu gerechnet werden.

Die Regelung des Leistungsübertragers erfolgt zentral durch eine Ansteuereinheit, die mit den Control Units 60 der einzelnen isolierten Zellen über eine Schnittstelle kommuniziert und die notwendigen Daten austauscht. Die zentrale Ansteuereinheit, auch als zentrale Regelungseinheit bezeichnet, erfasst die sonstigen für die Regelung notwendigen Größen wie beispielsweise Eingangsspannung und Netzspannung an den Übertrageranschlüssen 11, 12, sowie Temperatur etc. Die zentrale Regeleinheit ermittelt den jeweiligen Regelalgorithmus (Spannungsregelung, MPP usw.) und beinhaltet auch den Steuersatz zur Steuerung der einzelnen isolierten Zellen 2.

Durch die Aufteilung der Regelung/Steuerung auf eine zentrale Ansteuereinheit und dezentralen, in den isolierten Zellen angeordneten Control Units kann der Aufwand an Kommunikation innerhalb des Leistungsübertragers minimiert werden. Selbst bei geringen Bandbreiten für diese Kommunikation können eine Vielzahl von isolierten Zellen zuverlässig in dem Leistungsübertrager betrieben werden.

Der Steuersatz errechnet die Ansteuerungsparametern für die einzelnen isolierten Zellen 2, so dass die durch die Regelung errechnete Ein/Ausgangsspannung an den Übertrageranschlüssen 11, 12 des Leistungsübertragers 1 realisiert werden und dass die isolierten Zellen 2 spannungsmäßig und lastmäßig balanciert werden. Die Parameter werden mit den isolierten Zellen 2 über die Schnittstelle ausgetauscht.

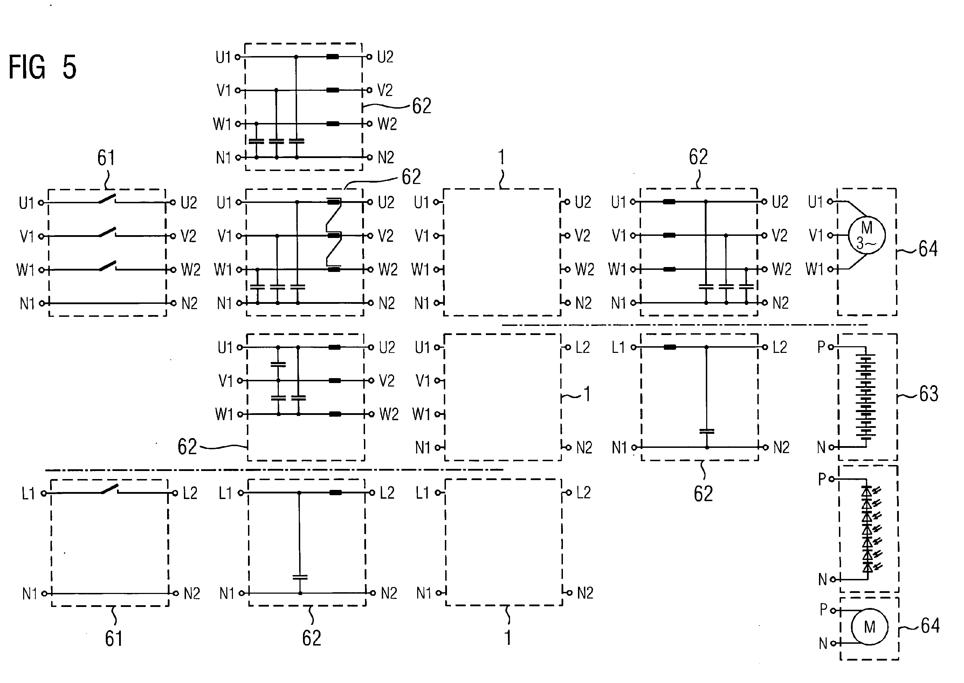

FIG 5 zeigt beispielhaft die Zusammensetzung von Modulen zur Bildung eines Leistungsübertragungssystems. Neben dem Leistungsübertrager 1, den es vorzugsweise in drei Ausgestaltungsformen (3AC/3AC, 1AC(DC)/1AC(DC), 3AC/1AC(DC)) gibt umfasst das System noch Schaltermodule 61, Filtermodule 62, DC-Energiequelle 63 und Motormodule 64 aus denen ein komplettes Leistungsübertragungssystem auf einfache und kostengünstige Weise aufgebaut werden kann.

Durch dieses einzigartige modulare Konzept kann in kürzester Zeit auf diese Kundenanforderungen eingegangen werden und modular neue Leistungsklassen bzw. Umrichtertopologien bereitgestellt werden. Viele Systeme im Bereich der erneuerbaren Energien benötigen nicht nur Netzeinspeisewechselrichter sondern auch DC/DC-Converter zur DC-Kopplung von DC-Energiequellen 63 bzw. Senken, wie beispielsweise Motoren in Form eines Motormoduls 64 an den Zwischenkreis. Durch diese Erfindungsmeldung ist es möglich, mit der identen Hardware komplette Systeme sowohl für die Antriebstechnik als auch für erneuerbare Energien zu erstellen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Zusammenfassend betrifft die Erfindung einen Leistungsübertrager zur Übertragung von elektrischer Energie zwischen ersten Übertrageranschlüssen und zweiten Übertrageranschlüssen des Leistungsübertragers. Für einen verbesserten Aufbau des Leistungsübertragers wird vorgeschlagen, dass der Leistungsübertrager mindestens zwei erste Übertrageranschlüsse und mindestens zwei zweite Übertrageranschlüsse aufweist, wobei der Leistungsübertrager isolierte Zellen aufweist, wobei die isolierten Zellen zwei erste Zellenanschlüsse und zwei zweite Zellenanschlüsse aufweisen, wobei die isolierten Zellen Leistungshalbleiter aufweisen, mit denen eine an den ersten Zellenanschlüssen anliegende erste Spannung in eine vorgebbare zweite Spannung an den zweiten Zellenanschlüssen oder eine an den zweiten Zellenanschlüssen anliegende zweite Spannung in eine vorgebbare erste Spannung an den ersten Zellenanschlüssen umwandelbar ist, wobei die ersten Zellenanschlüsse und die zweiten Zellenanschlüsse galvanisch voneinander isoliert sind, wobei zwischen zwei der ersten Übertrageranschlüsse eine erste Anzahl der isolierten Zellen mit ihren ersten Zellenanschlüssen in einer Reihenschaltung angeordnet ist, wobei zwischen zwei der zweiten Übertrageranschlüsse eine zweite Anzahl der isolierten Zellen mit ihren zweiten Zellenanschlüssen in einer Reihenschaltung angeordnet ist. Ferner betrifft die Erfindung ein Verfahren zum Übertragen von elektrischer Energie mittels eines solchen Leistungsübertragers.

## Patentansprüche

1. Leistungsübertrager (1) zur Übertragung von elektrischer Energie zwischen ersten Übertrageranschlüssen (11) und zweiten Übertrageranschlüssen (12) des Leistungsübertragers (1), wobei der Leistungsübertrager (1) mindestens zwei erste Übertrageranschlüsse (11) und mindestens zwei zweite Übertrageranschlüsse (12) aufweist, wobei der Leistungsübertrager (1) isolierte Zellen (2) aufweist, wobei die isolierten Zellen (2) zwei erste Zellenanschlüsse (21) und zwei zweite Zellenanschlüsse (22) aufweisen, wobei die isolierten Zellen (2) Leistungshalbleiter (3) aufweisen, mit denen eine an den ersten Zellenanschlüssen (21) anliegende erste Spannung (u₁) in eine vorgebbare zweite Spannung (u₂) an den zweiten Zellenanschlüssen (22) oder eine an den zweiten Zellenanschlüssen (22) anliegende zweite Spannung (u₂) in eine vorgebbare erste Spannung (u₁) an den ersten Zellenanschlüssen (21) umwandelbar ist, wobei die ersten Zellenanschlüsse (21) und die zweiten Zellenanschlüsse (22) galvanisch voneinander isoliert sind, wobei zwischen zwei der ersten Übertrageranschlüsse (11) eine erste Anzahl der isolierten Zellen (2) mit ihren ersten Zellenanschlüssen (21) in einer Reihenschaltung angeordnet ist, wobei zwischen zwei der zweiten Übertrageranschlüsse (12) eine zweite Anzahl der isolierten Zellen (2) mit ihren zweiten Zellenanschlüssen (22) in einer Reihenschaltung angeordnet ist.

2. Leistungsübertrager (1) nach Anspruch 1, wobei der Leistungsübertrager (1) drei erste Übertrageranschlüsse (11) aufweist, wobei die isolierten Zellen (2) zwischen den drei ersten Übertrageranschlüssen (21) in einer ersten Sternschaltung (41) angeordnet sind und wobei die jeweiligen Zweige (43) der ersten Sternschaltung (41) eine Reihenschaltung von isolierten Zellen (2) aufweisen, die mittels der ersten Zellenanschlüsse (21) gebildet wird.

3. Leistungsübertrager (1) nach Anspruch 2, wobei der Leistungsübertrager (1) drei zweite Übertrageranschlüsse (12) aufweist, wobei die isolierten Zellen (2) zwischen den drei zweiten Übertrageranschlüssen (12) in einer zweiten Sternschaltung (42) angeordnet sind und wobei die jeweiligen Zweige (44) der zweiten Sternschaltung (42) eine Reihenschaltung von isolierten Zellen (2) aufweisen, die mittels der zweiten Zellenanschlüsse (22) gebildet wird, wobei eine Gruppe von isolierten Zellen (2), die über die ersten Zellenanschlüsse (21) in dem gleichen Zweig (43) der ersten Sternschaltung (41) angeordnet sind, mit ihren zweiten Zellenanschlüssen (22) in unterschiedlichen Zweigen (44) der zweiten Sternschaltung (43) angeordnet sind.

4. Verfahren zum Übertragen von elektrischer Energie mittels eines Leistungsübertragers (1) nach einem der Ansprüche 1 bis 3, wobei die Leistungshalbleiter (3) der isolierten Zellen (2) derart angesteuert werden, dass ein an den ersten Übertrageranschlüssen (11) anliegendes erstes Spannungssystem (U_{sys1}) in ein vorgebbares zweites Spannungssystem (U_{sys2}) an den zweiten Übertrageranschlüssen (12), insbesondere in ein zweites Spannungssystem (U_{sys2}), das sich in Bezug auf Spannungshöhe und/oder Frequenz und/oder Phasenlage vom ersten Spannungssystem (U_{sys1}) unterscheidet, umgewandelt wird.

5. Verfahren nach Anspruch 4 zum Betreiben eines Leistungsübertragers (1) zumindest nach Anspruch 3, wobei eine an den zweiten Übertrageranschlüssen (12) unsymmetrische Leistungsverteilung durch Schalten der Leistungshalbleiter (3) derart kompensiert wird, dass die Leistungsverteilung an den ersten Übertrageranschlüssen (11) symmetrisch ist.
